# EUROPEAN PATENT APPLICATION

(11) **EP 2 072 544 A1**
(43) Date of publication of application: **24.06.2009**
(21) Application number: 07024677.2
(22) Date of filing: 19.12.2007
(51) Int. Cl.: C08F 290/00, C08F 290/14, C08F 290/06, C08G 63/91, C08L 67/08, C08F 8/00

(54) **Triglyceride macromonomers**

(71) Applicant: Akzo Nobel Coatings International B.V., 6824 BM Arnhem (NL)
(72) Inventor: Williams, Neal, Whitegrove Warfield Berkshire RG42 3JN (GB); Lampard, Chris, Slough Berkshire SL1 6EB (GB); Craun, Gary, Berea Ohio 44017 (US)
(74) Representative: Schalkwijk, Pieter Cornelis

(57) **Abstract**

An ethylenically unsaturated macromonomer being the reaction product of
i) the adduct formed from the reaction of an unsaturated non-mineral oil reacted with an enophile having an acid, ester or anhydride moiety and
ii) an ethylenically unsaturated chain extender material having at least two moieties reactive with the acid, ester or anhydride moiety of the enophile.

## Description

This invention relates to ethylenically unsaturated macromonomers derived from unsaturated non-mineral oils-especially vegetable oils; polymers-particularly in the form of aqueous dispersions derived from them and finally adhesives, coatings, especially architectural coatings, comprising the polymers.

By architectural coatings is meant paints, varnishes and woodstains, especially for use on the interior and exterior of structures and buildings such as houses, and also coatings for use in the garden such as fence paints and also metal used on railings.

There is increasing awareness of the need to use renewable resources in industry.

For many years, the main feedstock for industry, especially the chemical industry, has been fossil feedstock, either in the form of petroleum or coal. Whilst economists, mining and oil exploration experts may argue about the lifetime of known and yet to be discovered fossil feedstock reserves, it is indisputable that, in time, those reserves will inevitably be exhausted and even prior to that, become too expensive to be of any use as a feedstock in all but the most specialised applications.

Furthermore, converting this fossil feedstock into useful material for industry requires energy, releasing carbon dioxide and contributing to global warming. In addition, at the end of the useful life of the material, still more carbon dioxide is released, further adding to global warming.

Coatings typically comprise a mixture of particulate inorganic material and organic material. The inorganic material is usually a mixture of pigments and fillers and/or extenders. The pigments give colour to the paint and the fillers and extenders provide other properties, such as hardness, to the paint film. The organic material largely comprises a binder, the role of which, as the name suggests, is to bind any particulate matter together. It also provides adhesion to the surface to which the coating is applied.

The binders are usually high molecular weight polymers derived from monomers obtained by refining and further processing of fossil feedstock. The polymers are often produced in the form of aqueous dispersions of polymer microparticles referred to as latex. For simplicity it should be understood that the term polymer is used here to include homopolymers, copolymers, terpolymers and so on.

The manufacture and use of such polymer binders consumes some of the worlds non-renewable resources and in the process produces carbon dioxide.

Thus there is a need for polymer binders that are based, at least in part, on renewable feedstock such as that obtained from plant and/or animal material.

Oils are such a natural and renewable feedstock obtainable from various plants and animals, including fish. In the case of plants, it is generally the fruit that yields the oil. The term oil as used here, excludes mineral oils obtained form fossil feedstock such as petroleum and coal.

These oils are largely composed of a mixture of triglycerides (ie tri-esters of glycerol) characterised by the fatty acids portion. For example, the fatty acids component of the triglycerides making up palm oil, linseed oil and soya oil are shown below and have the following approximate composition by weight %:

| | Palm oil | Linseed oil | Soya oil |
|---|---|---|---|
| Palmitic acid (C₁₆, 0) | 44 | 6 | 10 |
| Stearic acid (C₁₈, 0) | 4.5 | 2.5 | 4 |
| Arachidic (C₂₀, 0) | 0 | 0.5 | 0 |
| Oleic acid (C₁₈, 1) | 40 | 19 | 23 |
| Linoleic (C₁₈, 2) | 10 | 24.1 | 51 |
| Linolenic (C₁₈, 3) | 0 | 47.4 | 7 |
| Other | 1.5 | 0.5 | 5 |
| | | | |
| Saturated | 48.5 | 9 | 14 |
| Unsaturated (total) | 50.0 | 90.5 | 81 |
| Unsaturated (>1) | 10.0 | 71.5 | 58 |
| Iodine value | 44-54 | 155-205 | 120-141 |

The subscript refers to the carbon chain length of the fatty acid and 0, 1 or 2 indicates the number of unsaturated bonds in the fatty acid.

Such unsaturated oils can be classified as drying, non-drying or semi-drying oils. What is meant by such terminology is the extent to which they autoxidise at normal temperatures to form a hard, dry film. Autoxidation is the process by which unsaturated oils absorb oxygen from the atmosphere to form in-situ hydroperoxides which then decompose to produce free radicals causing the oils to dry. The more unsaturated bonds the oil has, the more rapidly and completely it will dry. Similarly, oils with at least two unsaturated bonds per triglyceride, especially when conjugated, autoxidise even more readily.

The extent of the unsaturation is measured by the iodine value. It is generally regarded that non-drying oils have iodine values of less than 100, semi-drying oils from 100 to 140 and drying oils over 140 g of iodine per100g of oil. A more extensive list of iodine values can be found on pages 34 and 35 of The Chemistry of Organic Film Formers by D.H.Solomon, published by John Wiley and Sons in 1967, which are hereby incorporated by reference.

The oils can be characterised according to the number of double bonds per triglyceride type. We have found that a typical sample of palm oil, for example, has the following distribution, expressed on a weight % basis.

| | |
|---|---|
| 5 double bonds per triglyceride | <1 |
| 4 double bonds per triglyceride | ca 10 |
| 3 double bonds per triglyceride | ca 5 to 10 |
| 2 double bonds per triglyceride | ca 35 |
| 1 double bonds per triglyceride | ca 35 to 40 |
| 0 double bonds per triglyceride | ca 10 |

Thus whilst approximately 48.5% of the fatty acids in the oil are palmitic or stearic and thus saturated, nevertheless only about 10% of the triglycerides will be composed of fatty acids where all three are saturated, and therefore free of double bonds. This saturated portion of the palm oil is unreactive to enophile and dienophiles.

US 20050203246 discloses monomer formed by reacting unsaturated vegetable oils (specifically sunflower oil, linseed oil or soya bean oil) with an enophile or dienophile having an acid, ester or anhydride functionality, to form a derivative followed by reacting the derivative with a suitable hydroxyl, amine, thiol, oxirane or other functional vinyl monomer to form an ethylenically unsaturated triglyceride monomer. The weight average molecular weight of such monomers is approximately 1000 Daltons. It also discloses polymer latices containing up to 6% by weight of the monomer calculated on the polymer solids

However, we have found that latices derived from these monomer mixtures comprising such triglyceride monomer, and paints based on them, are unusable as they exude oily material.

This is especially problematic when the triglyceride monomer makes up more than 10% by weight of the polymer. This significantly limits the amount of the monomer that can be used in a coating composition. Consequently, the benefit of using such a renewable resource cannot be exploited to the full extent.

In addition, architectural coatings using binders comprising such monomers, especially those used on interior surfaces, tend to have a yellow hue. This makes it difficult to formulate bright whites and the pastel colours.

These problems of the known prior art severely limits the utility of these known triglyceride monomers.

We have now developed a new macromonomer based on unsaturated non-mineral oils obtained from plant or animal material which can be used in much higher amounts in polymer binders and with much reduced or no exudation of oily material.

According to the present invention there is provided an ethylenically unsaturated macromonomer being the reaction product of
i) the adduct formed from the reaction of an unsaturated non-mineral oil reacted with an enophile having an acid, ester or anhydride moiety and
ii) an ethylenically unsaturated chain extender material having at least two moieties reactive with the acid, ester or anhydride moiety of the enophile.

Preferably the weight average molecular weight, Mw, of the macromonomer is 1000 to 50000 Daltons, more preferably from 5000 to 40000, still more preferably from 10000 to 30000 Daltons, yet more preferably from 17000 to 25000 Daltons and most preferably form 19000 to 23000 Daltons.

For simplicity, the term enophile is used to include dienophile.

Enophiles have electron withdrawing moieties, such as ester, acid, cyanide and anhydride. Preferably the enophile is an electrophillic alkene or alkyne. Even more preferably is selected from the group consisting of maleic anhydride, fumaric acid, itaconic anhydride, acrylic acid and maleate esters and most preferably it is selected from the group consisting of maleic anhydride and fumaric acid.

By non-mineral oil is meant oil, comprising triglycerides, that has been obtained directly from plant or animal matter, including fish, rather than from a fossil feedstock.

Preferably, at least 80% by weight of the total triglycerides making up the oil contain one or more double bonds, more preferably 85 to 100%, still more preferably 90 to 100%, yet more preferably 95 to 100% and most preferably 100%. The amount of fully saturated triglycerides is preferably kept as low as possible as such triglycerides are unreactive to the enophile. The oily exudate seen on the surface of dried latex and paint films is thought to be this unreacted saturated material.

Being natural products, the composition of the oils varies significantly from year to year, the geographic location of the source and the degree of any further processing that may be carried out on the oil. Blending oils from different sources and even of different types not only produce a more consistent feedstock, but also enables oils having a triglyceride composition not found in nature to be produced.

However, even such blends are not ideal, because they consist of a complex mixture of triglycerides having saturated and mono and poly-unsaturated fatty acid portions. This inevitably results in a distribution of species being formed when the oils are subsequently reacted with polyfunctional material. There is also a risk of gelation. The ideal feedstock is one where the oil consists of a triglyceride having one monounsaturated and two saturated fatty acid moieties but this is not available in nature.

Interesterification of oils, whereby the fatty acid portions between and within triglycerides are rearranged, can produce oils which, whilst not composed of the ideal triglyceride structure described above, nevertheless have more of the triglycerides with fewer unsaturated bonds, than the naturally occurring oil. This significantly reduces the risk of gelation during manufacture of the macromonomer.

Interesterification can be carried with a single oil, resulting in randomisation of the fatty acid composition of the triglycerides. Or it may be performed with a mixture, comprising two or more oils. Careful choice of the oil mixture to be intersterified allows the triglyceride composition to be controlled.

An additional benefit of interesterification is that by blending oils and interesterifying the resulting mixture, a more consistent feedstock can be produced for further reaction according to the invention.

Accordingly, there is provided a method of making an ethylenically unsaturated macromonomer comprising the steps of
i) providing a chosen mixture of unsaturated non-mineral oils having a first mixture of triglycerides
ii) treating the mixture of oils with an interesterification catalyst to produce a second mixture of triglycerides different to the first
iii) reacting the second mixture of triglycerides with an enophile having an acid, ester or anhydride moiety to form an adduct
iv) reacting the adduct with an ethylenically unsaturated chain extender material having at least two moieties reactive with the acid, ester or anhydride moiety of the

Interesterification may be performed in the presence of a suitable catalyst at about 60 to 80°C for approximately half an hour. Suitable catalysts include sodium methoxide, sodium ethoxide, sodium isopropxide, sodium hydroxide, potassium hydroxide, sulphated zirconia, tungstated zirconia, hydrochloric acid, sulphuric acid, boron trifluoride, sodium ethylate, stannium hydroxide, potassium glycerolate, sodium methylate and lipases. Preferably, sodium methoxide is used as this is easily removed following the reaction. When sodium methoxide is used as the catalyst it is preferred to dry the oil and/or oils in order to prevent its hydrolysis. Preferably, the oil is derived from such interesterified oils.

Plant oils are preferred as their production consumes carbon dioxide rather than producing it.

Preferably the iodine value of the oil is less than 100 as the initial colour of the polymer film derived from it is less yellow. More preferably the iodine value is from 30 to 140, even more preferably from 30 to 100, still more preferably from 35 to 70 and most preferably from 40 to 60.

The proportion of the fatty acid component (of the triglycerides in the oil) having more than one double bond, is preferably less than 15%, more preferably from 0.5 to 15%, even more preferably from 1 to 12%, still more preferably from 1 to 10% and yet more preferably from 2 to 10% and most preferably from 5 to 10% by weight. It is such polyunsaturated fatty acids, especially having conjugated double bonds, which produce yellowing in dried paint films.

Suitable oils which may be used alone or blended with others include Palm oil, Soya bean oil, Cotton seed oil, Kapok oil, Mustard oil, Olive oil, Peanut oil, Rapeseed oil, Sesame oil and hydroxyl functional Castor oil. Preferably the oils for use in the invention are selected from the group consisting of Palm oil, Soya bean oil, Cotton seed oil, Kapok oil, Mustard oil, Olive oil, Peanut oil, Rapeseed oil, Sesame oil and hydroxyl functional Castor oil.

Palm oil is a useful oil as the macromonomer derived from it has the good balance of reactivity and resistance to yellowing, especially when formulated into a polymer latex for use as a binder in a coating composition. Whilst Palm oil, like the other oils, is a complex mixture of species, nevertheless the molecular weight is taken to be 848 Daltons for the purposes of stochiometric calculations.

Where it intended to produce a mixture of triglycerides by interesterification, additional oils may also be used in the interesterification reaction itself, including Corn oil, Safflower oil, Sunflower oil and Tall oil.

Preferably, the at least two moieties on the ethylenically unsaturated chain extender, reactive with the acid, ester or anhydride moiety of the enophile are hydroxyl, amino or epoxide. Even more preferably, there are only two such moieties on the chain extender and yet more preferably these are hydroxyl. Most preferably, the chain extender is glycerol methacrylate. Glycerol methacrylate is also known as 2,3 dihydroxypropyl methacrylate.

The mole ratio of oil:enophile is preferably less than or equal to 1, more preferably from 0.50 to 1.00, even more preferably from 0.55 to 0.75 and most preferably from 0.60 to 0.70. The resulting excess of enophile helps to reduce the amount of unreacted oil thereby limiting the tendency to produce exudate.

The mole ratio of oil:ethylenically unsaturated chain extender is preferably from 1:1 to 1:3, more preferably from 1:1 to 1:2.5, even more preferably from 1:1 to 1:2.2 and most preferably from 1:1 to 1:2. Too much ethylenically unsaturated chain extender will result in a gel.

The preferred mole ratio of oil:maleic anhydride:glycerol methacrylate is 1:1.5:0.75.

The reaction of the oil with the enophile is thought to produce an adduct of the triglycerides comprising the oil, and the enophile. The adduct having an acid, ester or anhydride moiety reacts with a suitable functional moiety on the ethylenically unsaturated chain extender to form a polymerisable macromonomer.

Preferably the molecular weight of the resulting macromonomer is at least twice that of the triglyceride monomer.

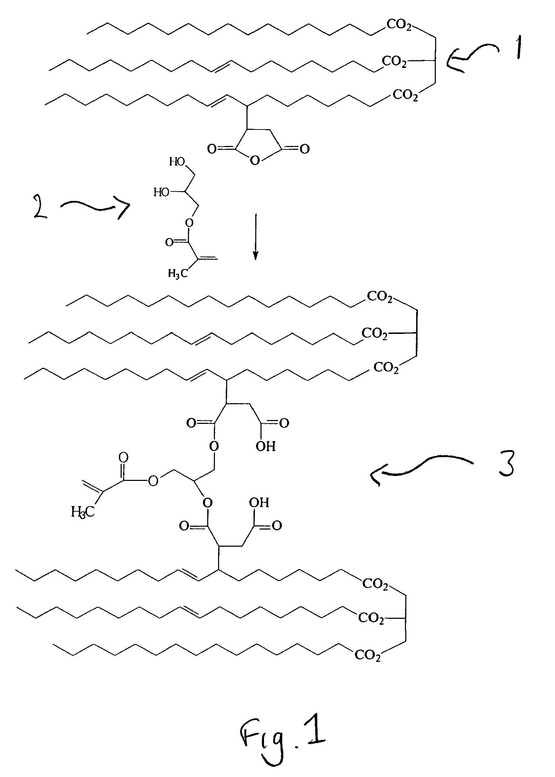

Figure 1 shows an idealised diagrammatic reaction scheme of an adduct (1) formed by reacting an unsaturated oil comprising a triglyceride with maleic anhydride as the enophile and then reacted with glycerol methacrylate (2) to form the macromonomer (3). Of course, because of the numerous multi-functional species formed during the reaction, the molecular weight is generally very much higher than this, as hereinbefore described.

It is preferable that the first step in the reaction is to heat the oil in the presence of iodine. We have found that macromonomer produced including this step produces less yellowing in a polymer binder comprising the macromonomer than binder derived from macromonomer produced without the iodine step. This is even more evident when such binders are used to make pastel or white paint.

In a further aspect of the invention there is provided a process of making the ethylenically unsaturated macromonomer comprising the steps of
i) reacting an unsaturated non-mineral oil with an enophile having an acid, ester or anhydride moiety, optionally in the presence of iodine, to form an adduct
ii) reacting the adduct of step i) with an ethylenically unsaturated chain extender material having at least two moieties reactive with the acid, ester or anhydride of the enophile to form the macromonomer.

The reaction of step i) is preferably carried out above180°C, more preferably from 200 to 300°C and most preferably from 200 to 250°C.

Where the fatty acid component of the triglycerides comprising the oil contains less than 30% of fatty acids having conjugated double bonds, it is preferred to heat the oil in the presence of iodine at a temperature of from 80 to 120°C, more preferably from 90 to 110°C and most preferably 100°C. The presence of the iodine serves to convert the unconjugated double bonds, for example of linoleic acid, to conjugated double bonds which are thus able to react with the enophile and/or dienophile, for example maleic anhydride, via the preferred Diels Alder reaction to produce the adduct i). Preferably the ratio of iodine:oil is from 0.002:1 to 0.010:1 calculated on a molar basis.

Since the reaction of the enophile with the unsaturated bonds requires the temperature to be at least 180°C and preferably from 200 to 250°C, the enophile may be present during the oil and iodine heating stage. Preferably, the temperature of the reactants is kept below 120°C.

Depending on the choice of unsaturated oil, the resultant neat macromonomer can vary in appearance at room temperature from a reasonably fluid liquid to a greasy or even waxy consistency. The oils of low iodine value, say less than 100, tend to be soft solid since they are less saturated than the higher iodine value oils.

In a further aspect of the invention, there is provided an addition polymer comprising the macromonomer as hereinbefore described. Preferably the polymer is polymerised with other ethylenically unsaturated monomers. Examples of suitable ethylenically unsaturated monomers include (meth)acrylic acid esters, amides, and nitriles, vinyl monomers and vinyl esters.

Using the nomenclature of (meth)acrylate to represent both acrylate and methacrylate, examples of suitable other acrylic acid esters and methacrylic acid esters are alkyl esters, preferably methyl (meth)acrylate, ethyl (meth)acrylate, propyl (meth)acrylate, butyl (meth)acrylate, 2-ethyl hexyl (meth)acrylate and alkoxy poly(oxyethylene) (meth)acrylate. Small amounts of methacrylic acid and/or acrylic acid may also be used. Hydroxy functional monomers such as hydroxy ethyl (meth)acrylate and hydroxy isopropyl (meth)acrylate may be included also. Examples of suitable vinyl monomers include styrene and alpha methyl styrene, vinyl propionate, vinyl butyrate, vinyl acetate and vinyl versatate. Preferably the addition polymer is derived from the esters of acrylic acid, methacrylic acid and optionally styrene and/or its derivatives. More preferably, the other monomers are styrene and 2-ethyl hexyl acrylate.

The glass transition temperature, or Tg, of the polymer comprising the macromonomer of the invention may be varied by copolymerising monomers of appropriate Tg. In this way copolymers which are hard, soft or of intermediate Tg can be made., which can produce a wide range of physical film properties such as tack (or stickiness), hardness and extensibility. Due to the long alkyl chains of the macromonomers, the Tg's will be low, comparable to butyl acrylate, lauryl acrylate and stearyl acrylate depending on the starting oil.

Preferably the Tg of the polymer is from -70 to 185°C, more preferably from -20 to 120°C.
More preferably the polymer is suitable for use as a binder in coatings especially in architectural coating compositions. For such binder polymer dispersions the preferred range is from -20 to 120°C, yet more preferably from -15 to 60°C, even more preferably from -10 to 25°C and most preferably from -10 to 10°C as this produces a more durable paint which is better resistant to knocks and scuffs.

More preferably, the polymer is in the form of an aqueous composition and still more preferably as an aqueous dispersion of polymer microparticles. By aqueous is meant that at least 50% by weight of the carrier liquid is water.

Preferably the polymer microparticles have a mean diameter of from 0.05 to 2 microns, more preferably from 0.05 to 0.5 microns, even more preferably from 0.05 to 0.3 microns.

Optionally, the microparticles are of the core-shell type having a core polymer composition different from the shell polymer composition. Preferably, the core:shell ratio calculated on a weight basis is from 1:8 to 2:1.

The ethylenically unsaturated monomers are caused to copolymerise by heating the monomer, in a carrier liquid-preferably water, containing polymerisation initiators, preferably to a temperature of from 30°C to 150°C, preferably from 40°C to 80°C. More preferably the polymerisation process used is an aqueous emulsion polymerisation process. In such a case the maximum polymerisation temperature should not exceed 98°C. Even more preferably, where redox initiator combinations are used, the preferred polymerisation temperature is from 20°C to 80°C and most preferably from 30°C to 70°C.

Suitable emulsion polymerisation initiators include oxidants, for example, peroxides such as tertiary butyl hydroperoxide, hydrogen peroxide and cumene hydroperoxide; persulphates such as potassium persulphate and ammonium persulphate; azo types such as 4,4' azobis (4-cyanopentanoic acid). Preferably from 0.002% by weight to 5% by weight of the initiator is used, calculated on the amount of ethylenically unsaturated monomers, more preferably from 0.05 to 2% and most preferably from 0.1 to 1%.

Reductants may be used in combination with the oxidant to form so called redox couples. This enables the polymerisation to be run at lower temperature than when relying on thermal decomposition alone. Suitable examples of such oxidants include sodium ascorbate, sodium metabisulphite and sodium formaldehyde sulphoxylate.

Suitable examples of redox couples include tertiary butyl hydroperoxide with ascorbic acid or sodium ascorbate or sodium metabisulphite or sodium formaldehyde sulphoxylate; hydrogen peroxide with ascorbic acid, sodium ascorbate or sodium metabisulphite or sodium formaldehyde sulphoxylate; cumene hydroperoxide with ascorbic acid sodium ascorbate or sodium metabisulphite or sodium formaldehyde sulphoxylate. More preferred is the redox couple tertiary butyl hydroperoxide with sodium ascorbate.

Optionally, metal salts such as copper, chromium and iron salts can be added when redox pairs are used. Such metals, usually in the form of water soluble salts, for example iron(II) sulphate, are especially useful where the natural level of dissolved metals in the reaction mixture are low. This can occur when a glass-lined reactor is used or a metal chelating agent is present. The presence of the added metal salts ensures that the redox system works effectively. Preferably the level of added metal salt is kept to a minimum to avoid discolouration of the dispersion itself and any coatings derived from it. This is generally less of a problem for adhesives.

The preferred initiator system is the redox combination of tertiary butyl hydroperoxide and ascorbic acid, the latter optionally in the form of sodium ascorbate. Such redox combinations allow the polymerisation to be carried out or around ambient temperature such as from 30 to 55°C.

In a further aspect of the invention there is provided a process of producing an aqueous dispersion of polymer microparticles derived from a monomer mixture comprising the macromonomer and other ethylenically unsaturated monomers, as hereinbefore described.

Preferably the process comprises the steps of
i) making an emulsion of ethylenically unsaturated monomers comprising the macromonomer and other monomers, in aqueous medium, preferably water, containing surfactant
ii) charging from 5 to 25% by weight of this to a polymerisation vessel and causing it to polymerise of to form polymer microparticles of mean particle diameter of from 0.05 to 2 microns
iii) feeding the remaining monomer emulsion of step i) to the vessel in the presence of the microparticles of step ii) and causing it to polymerise and grow them to form the final microparticles

More preferably, the process comprises the steps of
i) making an aqueous emulsion comprising the macromonomer and no other monomer
ii) charging the emulsion to a polymerisation vessel and causing it to polymerise to form polymer microparticles of mean particle diameter of from **0.05 to 2 microns**
iii) feeding a neat mixture of the other monomers to the vessel in the presence of the microparticles of step ii) and causing it to polymerise and grow them to form the final microparticles
This has the advantage that there is no need to make an aqueous emulsion of the macromonomer and the other ethylenically unsaturated monomers thereby saving time.

### It is thought that this produces a core-shell structure to the particle

### Materials used in the examples

RD Palm Oil is available from Hampshire Commodities, Fleet, Hampshire, UK, GU51 3SR.

Sunflower oil is available from Seatons

Glycerol methacrylate is available from Nippon Oil and Fat

Hydrogenated Soya wax flake available from Cargill

tert-butyl hydroperoxide is available from Akzo-Nobel

Disponil A4066 is available from Henkel

Examples of the invention will now be described.

| **Macromonomer Example (MM 1)** | | |
|---|---|---|
| | g | wt % |
| RD Palm oil | 1837.50 | 61.251 |
| Maleic anhydride | 318.72 | 10.624 |
| Iodine | 2.76 | 0.092 |
| Phenothiazine | 3.66 | 0.122 |
| Glycerol methacrylate | 25.95 | 0.865 |
| 2-ethyl hexyl acrylate | 811.38 | 27.046 |

To a 5 litre round bottomed flask fitted with a water cooled condenser, means to provide a nitrogen blanket and an anchor stirrer operating at 75 rpm was added 1837.5g of RD Palm oil and 318.72g of maleic anhydride whilst stirring. The mixture was heated to 100°C and 2.76g of iodine was added; the temperature was held for 30 minutes. The temperature was raised to 200°C and held there for 30 minutes and then increased to 220°C. After 5 hours and thirty minutes it was cooled to 200°C and 3.66g of phenothiazine was added. After five minutes 25.95g of glycerol methacrylate was added over 15 minutes. The batch temperature was maintained at 200°C for 1 hour and then cooled back to 80°C after which time 811.38g of 2-ethyl hexyl acrylate was added as diluent to produce a solution of macromonomer.

This was polymerised with styrene and 2-ethyl hexyl acrylate to form an aqueous dispersion of polymer microparticles.

## Claims

1. An ethylenically unsaturated macromonomer being the reaction product of
i) the adduct formed from the reaction of an unsaturated non-mineral oil reacted with an enophile having an acid, ester or anhydride moiety and
ii) an ethylenically unsaturated chain extender material having at least two moieties reactive with the acid, ester or anhydride moiety of the enophile.

2. An ethylenically unsaturated macromonomer according to claim 1 wherein the ethylenically unsaturated chain extender material comprises glycerol methacrylate.

3. An ethylenically unsaturated macromonomer according to claim 1 or claim 2 wherein the ethylenically unsaturated chain extender material is glycerol methacrylate.

4. An ethylenically unsaturated macromonomer according to claim 3 wherein the mole ratio of oil:enophile:glycerol methacrylate is 1:1.5:0.75.

5. A process of making the ethylenically unsaturated macromonomer of any one of the preceding claims comprising the steps of
i) reacting an unsaturated non-mineral oil with an enophile having an acid, ester or anhydride moiety, optionally in the presence of iodine, to form an adduct
ii)reacting the adduct of step i) with an ethylenically unsaturated chain extender material having at least two moieties reactive with the acid, ester or anhydride of the enophile to form the macromonomer.

6. An aqueous dispersion of addition polymer microparticles derived from a monomer composition comprising the macromonomer of any one of the preceding claims.

7. An ethylenically unsaturated macromonomer substantially as hereinbefore described by reference to the foregoing example.

8. An aqueous dispersion of polymer microparticles derived from a monomer mixture comprising the macromonomer of any one of claims 1 to 4 and 7.

9. An aqueous coating composition comprising the dispersion of claim 8.
